(19) Europäisches Patentamt
European Patent Office
Office européen des brevets

(11) EP 0 611 448 B1

(12) EUROPEAN PATENT SPECIFICATION

(45) Date of publication and mention of the grant of the patent:
**24.09.1997 Bulletin 1997/39**

(21) Application number: **92924364.0**

(22) Date of filing: **06.11.1992**

(51) Int Cl.[6]: **G01N 11/16**

(86) International application number:
**PCT/US92/09621**

(87) International publication number:
**WO 93/09419 (13.05.1993 Gazette 1993/12)**

# (54) A DEVICE FOR DETERMINING VISCOELASTIC PROPERTIES OF LIQUIDS AND METHOD FOR USE

VORRICHTUNG ZUR BESTIMMUNG DER VISKOELASTISCHEN EIGENSCHAFTEN VON FLÜSSIGKEITEN UND METHODE ZU DEREN ANWENDUNG

DISPOSITIF SERVANT A DETERMINER LES CARACTERISTIQUES VISCO-ELASTIQUES DE LIQUIDES, ET PROCEDE D'UTILISATION

(84) Designated Contracting States:
**AT BE CH DE DK ES FR GB GR IE IT LI LU MC NL SE**

(30) Priority: **08.11.1991 US 789719**

(43) Date of publication of application:
**24.08.1994 Bulletin 1994/34**

(73) Proprietor: **THE UNIVERSITY OF HOUSTON**
**Houston, TX 77204-2163 (US)**

(72) Inventors:
- **VAN ARSDALE, William**
  **Houston, TX 77005 (US)**
- **MOTIWALA, Hatim**
  **Katy, TX 77449 (US)**

(74) Representative: **Wilkinson, Stephen John et al**
**Stevens, Hewlett & Perkins**
**1 St. Augustine's Place**
**Bristol BS1 4UD (GB)**

(56) References cited:

| | |
|---|---|
| **US-A- 1 960 226** | **US-A- 2 752 778** |
| **US-A- 3 706 221** | **US-A- 3 803 903** |
| **US-A- 3 926 037** | **US-A- 4 343 190** |
| **US-A- 4 601 195** | **US-A- 4 794 788** |
| **US-A- 4 878 379** | |

- **5, 8-10).**
- **Society of Rheology, 1969, DICKINSON and WITT, "The Visco-elastic Behavior of Confined Thin Films of Bitumen in Tension Compression", pp. 485-511 (pp. 485-488).**
- **Perkin-Elmer, 1989, "DMA 7 Dynamic Mechanical Analyzer", pp. 1-14.**
- **Department Pheologie, 1991, "Viscoanalyzer", pp. 1-11.**
- **University of Pittsburgh, 1963, KUHN, "Hydrodynamic Pressure in a Viscous Fluid Film Between Axially Oscillating Parallel Circular Plates", pp. 1-49 (pp. 1, 2, 5, 8-10).**

EP 0 611 448 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

**Description**

BACKGROUND OF THE INVENTION

The present invention relates to rheometers for analyzing the behavior of thin liquid films and more particularly to rheometers for measuring viscoelastic properties of liquids.

Viscoelastic properties are important in predicting how a liquid will behave under stress. Knowing these properties is becoming increasingly important as industry is starting to use polymer additives in liquid products.

Rheometers typically determine viscoelastic properties by shearing a liquid sample between plates. The plates are separated by a fixed gap. One plate moves relative to the other by sliding or rotating. The invention uses normal oscillations of a sample between parallel plates to determine viscoelastic properties. This approach accurately characterizes liquids with a wide range of viscosity. The technique is inherently simpler to implement at a significantly lower cost relative to prior art rheometers.

SUMMARY OF THE INVENTION

It is an object of the present invention to inexpensively, easily, and accurately measure the viscoelastic properties of fluids by normally oscillating a small liquid sample between two parallel, circular plates.

It is a further object of the present invention to measure G' and G", the storage and loss moduli of viscoelastic fluids.

To achieve the foregoing objects, there is disclosed an oscillatory squeezing flow rheometer as claimed in claim 3.

Also to achieve the foregoing objects, there is disclosed a method of determining viscoelastic properties of liquids comprising the steps of placing a liquid circularly between and in contact with parallel plates, sinusoidally oscillating one of the plates in a direction normal to the other plate, measuring the radius of the fluid circle, measuring the force of the oscillations, measuring the displacement of the moving plate, measuring the mean distance between the plates, measuring the frequency of the oscillations, and determining fluid properties base on those measurements.

Also to achieve the foregoing objects, there is disclosed a method of determining G', the storage modulus, and G", the loss modulus, of non-Newtonian fluids comprising the steps of placing a liquid circularly between and in contact with parallel plates; measuring the radius of the fluid circle; measuring the mean distance between the plates; applying a sinusoidally oscillating force to one of the plates in a direction normal to the other plate, the force oscillations having a force amplitude and a frequency; measuring the force amplitude; measuring the frequency; measuring the displacement amplitude of the moving plate; measuring a phase lag between the displacement of the moving plate and the force oscillations; and determining G' and G" from these measurements.

BRIEF DESCRIPTION OF THE DRAWINGS

Fig. 1 is an elevational view, partly in cross-section, of a typical embodiment of the invention.

Fig. 2 depicts an enlarged cross-sectioned view of the two plates of the invention.

Fig. 3 is a schematic elevational view of the system using the present invention.

DESCRIPTION OF THE PREFERRED EMBODIMENTS

Referring now to the drawings, particularly Fig. 1, rheometer 10 depicts a typical embodiment of the claimed invention. A temperature controlled plate 1 is mounted on a movable base plate 2. The temperature control plate 1 is desired to maintain the temperature of the liquid constant so as to stabilize the liquid's properties. The movable base plate 2 is mounted on a pneumatic linear actuator 3, having rings 4 to limit vertical movement of the base while the base is under oscillatory stress. The height of the temperature control plate 1 is controlled by pumping or releasing air through an air cylinder 5 and air supply line 6 of actuator 3. An oscillating plate 7 is connected to and extends from a shaker motor 8 such that the oscillating plate 7 is parallel to the temperature control plate 1. A non-contacting displacement sensor 9 is attached to the shaker motor 8. The mean distance $h_0$ between the temperature control plate 1 and the oscillating plate 7 is controlled by adjusting a dc offset to the motor 8. The mean distance $h_0$ is determined using a spacer plate to fix the gap at a specific position. The control plate 1 and the oscillating plate 7 are circular.

Fig. 2 depicts the flow geometry under consideration in the present invention. The top plate 7 has radius R. This plate moves in response to a sinusoidal force F with amplitude $F_0$ and frequency $\omega$ in accordance with the following formula:

$$F(t) = F_0 \sin (\omega t) \qquad (1)$$

The resulting gap, in terms of the mean value $h_0$ and the imposed oscillation x(t), is given by the formula:

$$h(t) = h_0 + x(t) \tag{2}$$

This motion causes a fluid with constant viscosity $\mu$ and density $\rho$ to exert on the upper plate the force $F_n$, represented in the following formula:

$$F_n = -\frac{3\pi R^4}{2h_0^3}\left(\mu\dot{x} + \frac{\rho h_0^2}{10}\ddot{x}\right) \tag{3}$$

A similar expression is obtained for viscoelastic fluids where G' and G" denote storage and loss moduli:

$$F_v = -\frac{3\pi R^4}{2h_0^3}\left(G'x + \frac{G''}{\omega}\dot{x} + \frac{\rho h_0^2}{10}\ddot{x}\right) \tag{4}$$

The foregoing expression assumes that the amplitude of imposed oscillations is small compared to the mean gap which is also small compared to the plate radius ($x << h_0 << R$). Note that formula 3 is a special case of formula (4) in which $G' = 0$ and $\mu = G''/\omega$.

The shaker motor 8 and attached plate 7 are modeled as a second order system. The response of this system without any liquid in the gap is given by the equation:

$$\ddot{x} + 2\zeta\omega_n\dot{x} + \omega_n^2 x = \frac{F_0}{m}\sin(\omega t) \tag{5}$$

where $\omega_n$ is the natural frequency, $\zeta$ is the damping ratio, and m is the effective mass, a quantity that accounts for system inertia, such as that associated with the moving parts of the motor. The parameters $\omega_n$, $\zeta$, and *m* are well known to and readily determined by those skilled in the art.

The presence of fluid in the gap between the two plates adds another forcing term to the equation for system response. For a viscoelastic liquid, this equation becomes:

$$\left(m + \frac{3\pi\rho R^4}{20h_0}\right)\ddot{x} + \left(\frac{3\pi R^4}{2\omega h_0^3}G'' + 2m\zeta\omega_n\right)\dot{x}$$

$$+ \left(\frac{3\pi R^4}{2h_0^3}G' + m\omega_n^2\right)x = F_0\sin(\omega t) \tag{6}$$

Asolution of the form $x = x_0 \sin(\omega t - \varphi)$ is substituted into equation (7). This solution is expressed in terms of the oscillation amplitude $x_0$ and the phase lag $\varphi$ relative to the applied force. The assumed solution is valid provided the storage and loss moduli are given the expressions:

$$G' = \frac{2F_0h_0^3}{3\pi x_0R^4}\cos(\varphi) + \frac{2\,mh_0^3}{3\pi R^4}(\omega^2 - \omega_n^2) + \frac{\rho\,\omega^2h_0^2}{10} \qquad (7)$$

$$G'' = \frac{2F_0h_0^3}{3\pi x_0R^4}\sin(\varphi) - \frac{4\,m\rho\omega\omega_nh_0^3}{3\pi R^4} \qquad (8)$$

Fig. 3 depicts a diagram of a typical equipment array using the claimed invention. The computer 17 monitors and sends to an amplifier 16 an analog oscillating voltage signal 11. The voltage signal 11 is converted by amplifier 16 to an oscillating current signal 12. Thus, the oscillating current 12 can be readily adjusted as desired through the computer 17.

The rheometer 10 sends to the computer 17 an analog voltage signal 13 describing the oscillator current 12 to the motor 8. The signal 13 oscillates sinusoidally at a frequency $\omega$. The amplitude of the signal 13 is proportional to the force amplitude $F_0$ of the oscillating plate 7. Force amplitude $F_0$ can be calibrated experimentally from the signal 13.

The rheometer 10 sends also to the computer 17 an oscillating voltage 14 from the displacement sensor 9. The oscillating voltage 14 is proportional to the displacement amplitude $x_0$. Displacement amplitude $x_0$ can be calibrated experimentally from the oscillating voltage 14.

The computer 17 determines the phase lag $\varphi$ between F and displacement x. From $\varphi$ and the other foregoing information, the computer readily calculates G' and G".

The preferred oscillation means is a shaker motor comprising a moving coil assembly suspended by a magnetic field and is manufactured by Ling Dynamic Systems, Ltd. The preferred means for measuring plate displacement is a non-contacting sensor, such as a photonic sensor manufactured by Mechanical Technology, Inc. However, a capacitance sensor incorporated in the motor may also be used effectively. The preferred means for measuring force exerted by the shaker motor is to monitor the voltage drop across a resistor. The force is calibrated as a function of this voltage. The preferred embodiment of the claimed rheometer includes a thermoelectric plate manufactured by Ultramation, Inc., for raising and lowering the lower plate. The preferred means for instrument control and data acquisition as in Fig. 4 is an Apple Macintosh II computer with hardware and software from National Instruments.

One skilled in the art will readily appreciate the present invention as well-adapted to carry out the objects mentioned as well as those inherent therein. The methods, procedures, and techniques described herein are presently representative of the preferred embodiments, are intended to be exemplary, and are not intended as limitations on the scope. Changes therein and other uses will occur to those skilled in the art which are encompassed within the spirit of the invention or defined by the scope of the claims.

## Claims

**1.** A method of determining viscoelastic properties of liquids comprising the steps of:

placing a liquid circularly between and in contact with parallel plates;
sinusoidally oscillating one of the plates in a direction normal to the other plate;
measuring the radius of the liquid circle;
measuring the force of the oscillations;
measuring the displacement of the moving plate;
measuring the mean distance between the plates;
measuring the frequency of the oscillations; and
determining G', the storage modulus, and G", the loss modulus, based on these measurements.

**2.** A method according to claim 1 having the additional step of maintaining constant the temperature of the liquid by controlling the temperature of the bottom plate.

**3.** An oscillatory squeezing flow rheometer for analyzing the behavior of thin fluid films comprising:

parallel first and second plates for receiving a fluid film;
an electric oscillatory shaker motor attached to the first plate, the motor oriented to sinusoidally oscillate the first plate normal to the second plate;

means for measuring electrical current supplied to the shaker motor, the motor and means calibrated such that the force of the oscillations can be measured as a function of electrical current output; and
means for measuring oscillation displacement of the first plate; and
means for directly controlling the temperature of at least one of the two plates,
means for determining G', the storage modulus, and G", the loss modulus, based on measurements of the force of the oscillations, the radius of a circle of fluid between the parallel plates, the oscillation displacement, the mean distance between the plates and the frequency of the oscillations.

**4.** A rheometer according to claim 3 in which the means for measuring oscillation displacement is a non-contacting displacement sensor attached to the shaker motor.

**5.** A rheometer according to claim 3 in which the means for measuring oscillation displacement is a capacitance sensor incorporated into the motor.

**6.** A rheometer according to claim 4 having a dc offset to adjust a gap between the plates.

**7.** A method of determining G', the storage modulus, and G", the loss modulus, of non-Newtonian fluids comprising the steps of:

placing a liquid circularly between and in contact with parallel plates;
measuring the radius of the liquid circle;
measuring the mean distance between the plates;
applying a sinusoidally oscillating force to one of the plates in a direction normal to the other plate, the force oscillations having a force amplitude and a frequency;
measuring the force amplitude;
measuring the frequency;
measuring the displacement amplitude of the moving plate;
measuring a phase lag between the displacement of the moving plate and the force oscillations; and
determining G' and G" from these measurements.

**8.** The method of claim 7 in which the oscillatory force is applied by a rheometer and having the additional steps of obtaining the natural frequency, the damping ratio, and effective mass of the rheometer.

**9.** A method according to claim 8 in which G' and G" are determined as a function of frequency applying the measurements the following equations:

$$G' = \frac{2F_0h_0^3}{3\pi x_0R^4}\cos(\varphi) + \frac{2\ mh_0^3}{3\pi R^4}(\omega^2 - \omega_n^2) + \frac{\rho\ \omega^2 h_0^2}{10}$$

$$G'' = \frac{2F_0h_0^3}{3\pi x_0R^4}\sin(\varphi) - \frac{4\ m\rho\omega\omega_n h_0^3}{3\pi R^4}$$

## Patentansprüche

**1.** Verfahren zur Bestimmung von viskoelastischen Eigenschaften von Flüssigkeiten, umfassend die Schritte:

Einbringen einer Flüssigkeit in Kreisform zwischen und in Kontakt mit parallelen Platten;
Versetzen von einer der Platten in sinusförmige Schwingungen in einer Richtung senkrecht zur anderen Platte;
Messen des Radius des Flüssigkeitskreises;
Messen der Kraft der Schwingungen;
Messen der Verschiebung der sich bewegenden Platte;
Messen des mittleren Abstands zwischen den Platten;
Messen der Frequenz der Schwingungen; und

Bestimmen von G', dem Speichermodul, und G", dem

Verlustmodul, auf der Grundlage dieser Messungen.

**2.** Verfahren nach Anspruch 1, mit dem zusätzlichen Schritt eines Konstanthaltens der Temperatur der Flüssigkeit durch Steuerung der Temperatur der unteren Platte.

**3.** Schwingquetschfließrheometer zum Analysieren des Verhaltens von dünnen Fluidfilmen, umfassend:

eine parallele erste und zweite Platte zur Aufnahme eines Fluidfilms;
einen mit der ersten Platte verbundenen elektrischen Schwingvibrationsmotor, wobei der Motor ausgerichtet ist, um die erste Platte senkrecht zur zweiten Platte in sinusförmige Schwingungen zu versetzen;
eine Einrichtung zum Messen eines dem Vibrationsmotor zugeführten elektrischen Stroms, wobei der Motor und die Einrichtung derart kalibriert sind, daß die Kraft der Schwingungen in Abhängigkeit von der Abgabe des elektrischen Stroms gemessen werden kann; und
eine Einrichtung zum Messen der Schwingungsverschiebung der ersten Platte; und
eine Einrichtung zum unmittelbaren Steuern der Temperatur von mindestens einer der beiden Platten;
eine Einrichtung zum Bestimmen von G', dem Speichermodul, und G", dem Verlustmodul, auf der Grundlage von Messungen der Kraft der Schwingungen, des Radius eines Fluidkreises zwischen den parallelen Platten, der Schwingungsverschiebung, des mittleren Abstands zwischen den Platten und der Frequenz der Schwingungen.

**4.** Rheometer nach Anspruch 3, bei welchem die Einrichtung zum Messen der Schwingungsverschiebung ein mit dem Vibrationsmotor verbundener berührungsfreier Verschiebungssensor ist.

**5.** Rheometer nach Anspruch 3, bei welchem die Einrichtung zum Messen der Schwingungsverschiebung ein in den Motor eingebauter Kapazitätssensor ist.

**6.** Rheometer nach Anspruch 4, mit einem Gleichstrom-Offset zum Einstellen eines Spalts zwischen den Platten.

**7.** Verfahren zur Bestimmung von G', dem Speichermodul, und G", dem Verlustmodul, von Nichtnewtonschen Fluiden, umfassend die Schritte:

Einbringen einer Flüssigkeit in Kreisform zwischen und in Kontakt mit parallelen Platten;
Messen des Radius des Flüssigkeitskreises;
Messen des mittleren Abstands zwischen den Platten;
Aufbringen einer sinusförmig schwingenden Kraft auf eine der Platten in einer Richtung senkrecht zur anderen Platte, wobei die Kraftschwingungen eine Kraftamplitude und eine Frequenz aufweisen;
Messen der Kraftamplitude;
Messen der Frequenz;
Messen der Verschiebungsamplitude der sich bewegenden Platte;
Messen einer Phasenverzögerung zwischen der Verschiebung der sich bewegenden Platte und den Kraftschwingungen; und
Bestimmen von G' und G" aus diesen Messungen.

**8.** Verfahren nach Anspruch 7, bei welchem die Schwingkraft durch ein Rheometer aufgebracht wird und mit den zusätzlichen Schritten eines Erlangens der natürlichen Frequenz, des Dämpfungsverhältnisses und der wirksamen Masse des Rheometers.

**9.** Verfahren nach Anspruch 8, bei welchem G' und G" in Abhängigkeit von der Frequenz unter Einsetzen der Messwerte in die folgenden Gleichungen bestimmt werden:

$$G' = \frac{2F_0 h_0^3}{3\pi x_0 R^4}\cos(\varphi) + \frac{2\,mh_0^3}{3\pi R^4}(\omega^2 - \omega_n^2) + \frac{\rho\,\omega^2 h_0^2}{10}$$

$$G'' = \frac{2F_0 h_0^3}{3\pi x_0 R^4}\sin(\varphi) - \frac{4\ m\rho\omega\omega_n h_0^3}{3\pi R^4}$$

## Revendications

1. Procédé de détermination des propriétés viscoélastiques des liquides, comprenant les étapes suivantes :

   la disposition d'un liquide circulairement entre des plaques parallèles et à leur contact,
   l'oscillation sinusoïdale de l'une des plaques en direction perpendiculaire à l'autre plaque,
   la mesure du rayon du cercle de liquide,
   la mesure de la force des oscillations,
   la mesure du déplacement de la plaque mobile,
   la mesure de la distance moyenne entre les plaques,
   la mesure de la fréquence des oscillations, et
   la détermination de G', qui est le module d'accumulation, et de G", qui est le module de perte, en fonction de ces mesures.

2. Procédé selon la revendication 1, comprenant une étape supplémentaire de maintien de la température du liquide à une valeur constante par réglage de la température de la plaque inférieure.

3. Rhéomètre continu à écrasement oscillatoire destiné à l'analyse du comportement de films minces de fluide, comprenant :

   une première et une seconde plaque parallèles destinées à recevoir un film de fluide,
   un moteur électrique de secouage oscillant fixé à la première plaque, le moteur étant orienté afin qu'il provoque une oscillation sinusoïdale de la première plaque perpendiculaire à la seconde plaque,
   un dispositif de mesure d'un courant électrique transmis au moteur de secouage, le moteur et le dispositif étant étalonnés afin que la force des oscillations puisse être mesurée en fonction d'un courant électrique transmis, et
   un dispositif de mesure du déplacement de la première plaque par oscillation, et
   un dispositif de réglage direct de la température de l'une au moins des deux plaques,
   un dispositif de détermination de G', qui est le module d'accumulation, et de G", qui est le module de perte, d'après les mesures de la force des oscillations, du rayon d'un cercle de fluide présent entre les plaques parallèles, du déplacement d'oscillation, de la distance moyenne entre les plaques et de la fréquence des oscillations.

4. Rhéomètre selon la revendication 3, dans lequel le dispositif de mesure du déplacement par oscillation est un capteur de déplacement sans contact fixé au moteur de secouage.

5. Rhéomètre selon la revendication 3, dans lequel le dispositif de mesure du déplacement d'oscillation est un capteur capacitif incorporé au moteur.

6. Rhéomètre selon la revendication 4, ayant un décalage en courant continu destiné à l'ajustement de l'espace compris entre les plaques.

7. Procédé de détermination de G', qui est le module d'accumulation, et de G", qui est le module de perte, des fluides non newtoniens, comprenant les étapes suivantes :

   la disposition d'un liquide circulairement entre des plaques parallèles et au contact de celles-ci,
   la mesure du rayon du cercle de liquide,
   la mesure de la distance moyenne comprise entre les plaques,
   l'application d'une force d'oscillation sinusoïdale à l'une des plaques en direction normale à l'autre plaque, les oscillations des forces ayant une amplitude de force et une fréquence,
   la mesure de l'amplitude de la force,
   la mesure de la fréquence,

la mesure de l'amplitude de déplacement de la plaque mobile,
la mesure d'un retard de phase entre le déplacement de la plaque mobile et les oscillations sous l'action d'une force, et
la détermination des modules G' et G" à partir de ces mesures.

**8.** Procédé selon la revendication 7, dans lequel la force d'oscillation est appliquée par un rhéomètre et ayant des étapes supplémentaires d'obtention de la fréquence naturelle, du rapport d'amortissement et de la masse efficace du rhéomètre.

**9.** Procédé selon la revendication 8, dans lequel les modules G' et G" sont déterminés en fonction de la fréquence par application des équations suivantes aux mesures :

$$G' = \frac{2F_0 h_0^3}{3\Pi x_0 R^4}\cos(\varphi) + \frac{2\,mh_0^3}{3\Pi R^4}(\omega^2 - \omega_n^2) + \frac{\rho\,\omega^2 h_0^2}{10}$$

$$G'' = \frac{2F_0 h_0^3}{3\Pi x_0 R^4}\sin(\varphi) - \frac{4\,m\rho\omega\omega_n h_0^3}{3\Pi R^4}$$

FIG.1

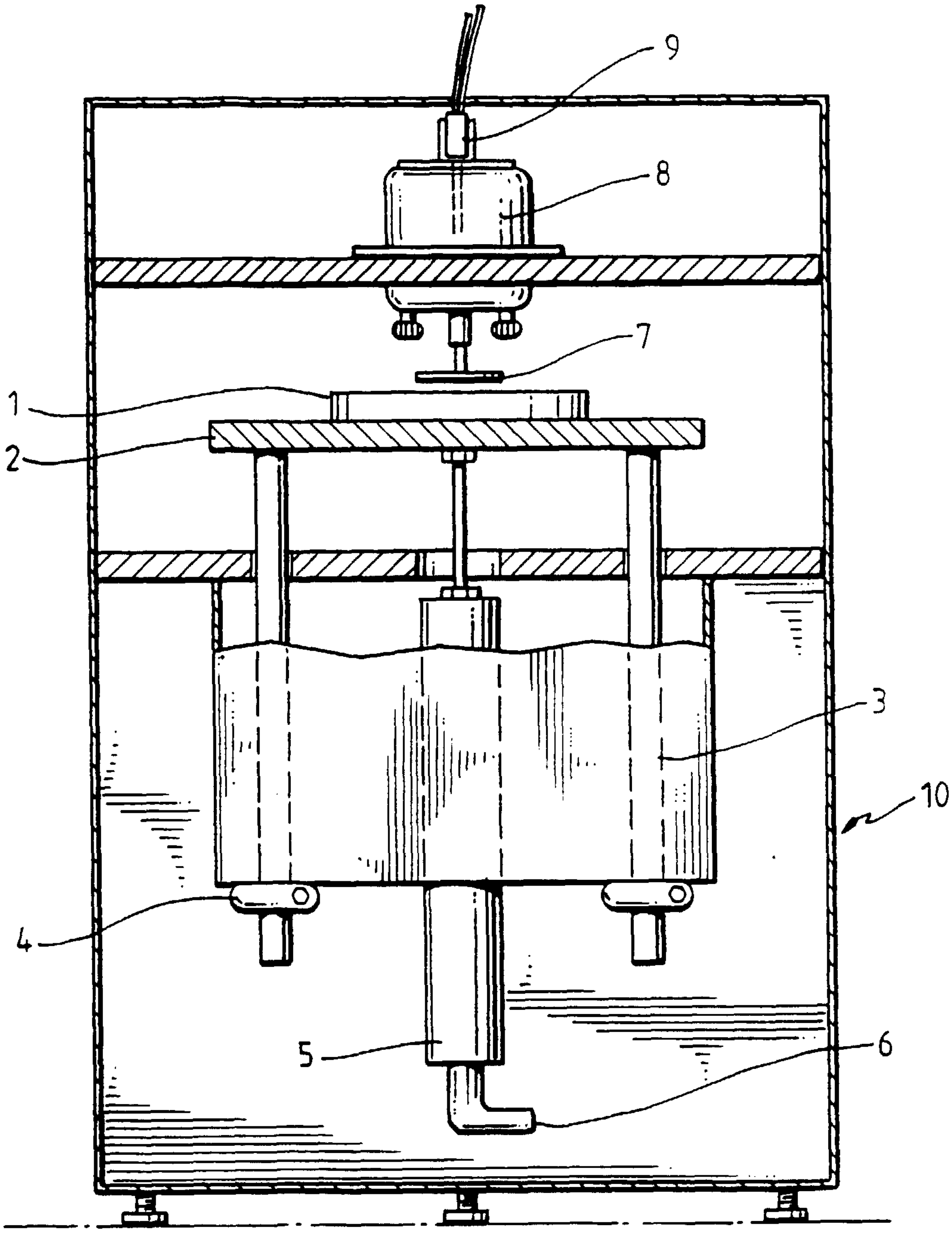

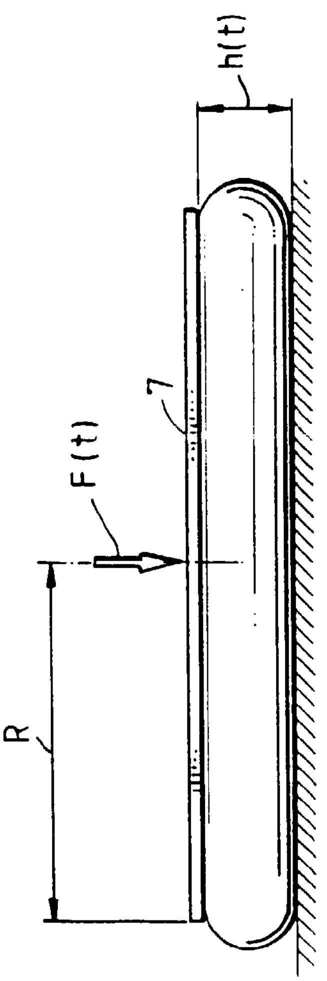


FIG.2

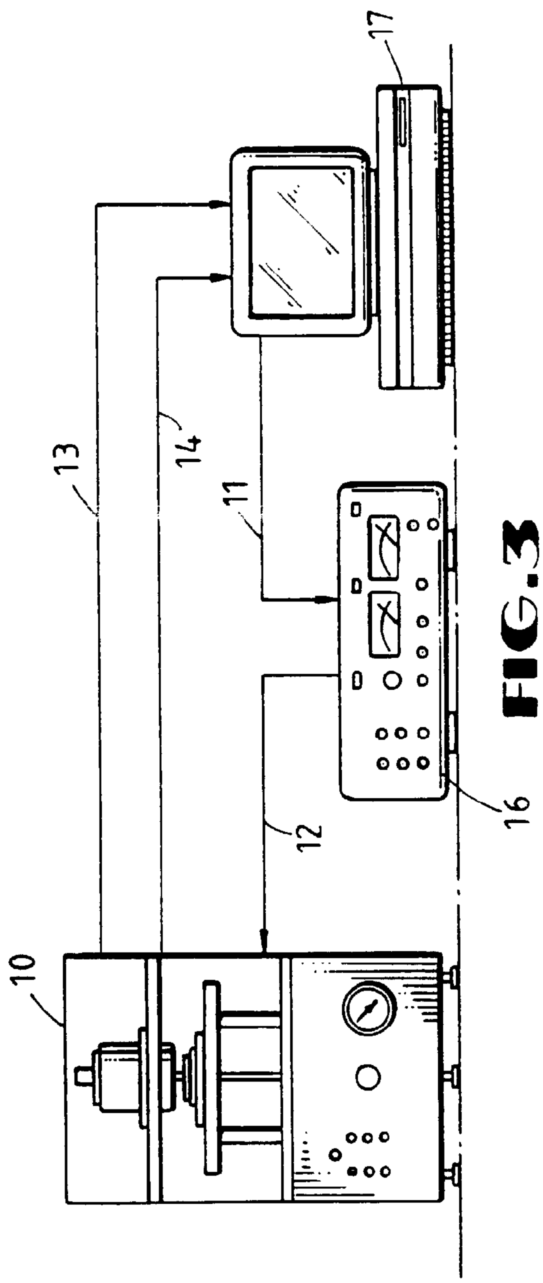


FIG.3